# EUROPÄISCHE PATENTSCHRIFT

(11) **EP 0 498 904 B1**
(45) Veröffentlichungstag und Bekanntmachung des Hinweises auf die Patenterteilung: **30.11.1994**
(21) Anmeldenummer: 91101907.3
(22) Anmeldetag: 11.02.1991
(51) Int. Cl.: G01D 5/38

(54) **Photoelektrische Positionsmesseinrichtung**
Photo-electric position measuring device
Dispositif photoélectrique de mesure de position

(43) Veröffentlichungstag der Anmeldung: 19.08.1992
(73) Patentinhaber: Dr. Johannes Heidenhain GmbH, D-83292 Traunreut (DE)
(72) Erfinder: Michel, Dieter, Dipl.-Ing., W-8220 Traunstein (DE); Huber, Walter, Dipl.-Ing., W-8220 Traunstein (DE)

(56) Entgegenhaltungen:
- EP-A- 0 160 811
- EP-B- 0 078 892
- EP-B- 0 118 673
- EP-B- 0 121 658
- GB-A- 2 210 525

## Beschreibung

Die Erfindung bezieht sich auf eine photoelektrische Positionsmeßeinrichtung nach dem Oberbegriff des Anspruches 1.

Derartige Positionsmeßeinrichtungen sind bekannt. So ist es aus der DE-OS 24 16 212 bekannt, bei einer inkrementalen Längen- und/oder Winkelmeßeinrichtung auf einer gesonderten Spur neben der Inkremental-Meßteilung Referenzmarken vorzusehen, die als Absolutwertmarkierungen dienen. Dabei unterscheiden sich die Abstände der einzelnen Referenzmarken voneinander. Durch Abtastung der inkrementalen Teilung kann der individuelle Abstand zweier Referenzmarken jeweils aus der Summe der Inkremente zwischen zwei Referenzmarken ermittelt werden. Diese durch Auszählung ermittelte Summe stellt die Kennung für die Referenzmarken dar. Zur Ermittlung der Kennzeichnung einer Referenzmarke und ihrer absoluten Position müssen also immer zwei Referenzmarken bei der Abtastung überfahren werden. Dieses Verfahren ist umständlich und zeitraubend, wenn beispielsweise zwei Referenzmarken weit auseinander liegen. Zudem können bei fehlerhafter Zählung der Inkremente zwischen zwei Marken falsche Abstände ermittelt und damit falsche Absolutwerte gebildet werden.

Weitere Positionsmeßeinrichtungen sind aus EP-B-0 078 892, EP-B-0 118 673 und EP-B-0 121 658 bekannt.

Der Erfindung liegt die Aufgabe zugrunde, Positionsmeßeinrichtungen mit Referenzmarken so zu verbessern, daß die Auswertung der Referenzmarken erleichtert wird, daß die einzelnen Referenzmarken zuverlässig identifiziert werden können und daß die Positionsmeßeinrichtungen störsicherer werden.

Diese Aufgabe wird durch eine Positionsmeßeinrichtung mit den Merkmalen des Anspruchs 1 gelöst.

Die Unteransprüche geben vorteilhafte Ausgestaltungen der Erfindung an.

Die besonderen Vorteile der Erfindung liegen in der sicheren Erkennung der spezifischen Referenzmarke durch die Auswertung der zugehörigen Codierungsmarke. Durch die in der Codierungsmarke enthaltenen Informationsdaten kann die Auswerteeinrichtung die Referenzmarke eindeutig bestimmen.

Nachstehend wird die Erfindung mit Hilfe eines Beispiels anhand der Zeichnung erläutert.

Es zeigt
- Figur 1: ein Optikschema einer Vorrichtung zur Abtastung eines Meßteilungsträgers;
- Figur 2: Detektorplatine;
- Figur 3: einen Meßteilungsträger;
- Figur 4: ein weiteres Optikschema;
- Figur 5: Codefelder auf dem Meßteilungsträger;
- Figur 6: eine weitere Detektorplatine;
- Figur 7 und Figur 8: verschiedene Codiermarkierungsquerschnitte;
- Figur 9: einen Ausschnitt aus einer Maßstabsansicht mit Farbfiltern;
- Figur 10: einen Ausschnitt aus einer Draufsicht auf eine Abtastplatte;
- Figur 11: einen Ausschnitt aus einer Draufsicht auf einen Maßstab;
- Figur 12: eine weitere Detektorplatine;
- Figur 13: einen Meßteilungsträger mit Prismen;
- Figur 14: eine Abtastplatte mit Prismen und
- Figur 15: eine Durchlicht-Positionsmeßeinrichtung mit polarisationsoptischer Referenzmarken-Codierung.

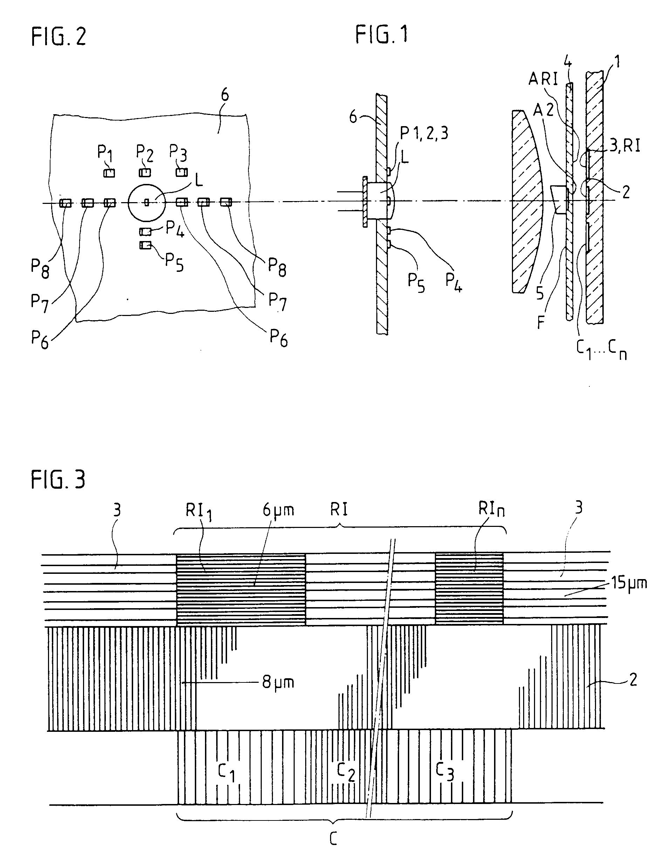

Figur 1 zeigt einen Teilungsträger 1, der in nicht näher spezifizierter, nicht dargestellter Weise an einem der Objekte, deren Position gemessen werden soll, befestigt ist. Der Teilungsträger 1 trägt eine Meßteilung 2, die als Phasengitter ausgebildet ist. Entlang der Meßteilung 2 erstreckt sich eine ebenfalls als Phasengitter ausgebildete Umfeldteilung 3, wie aus Figur 3 ersichtlich ist. Die Gitterlinien dieser Umfeldteilung 3 verlaufen senkrecht zu den Gitterlinien der Meßteilung 2.

An einer exponierten Stelle - dem sogenannten Eich- oder Bezugspunkt der Meßteilung - ist eine Referenzmarke RI innerhalb der Umfeldteilung 3 angebracht. Üblicherweise werden mehrere Referenzmarken auf dem Teilungsträger 1 angeordnet.

Figur 3 zeigt eine vergrößerte Darstellung. Referenzmarken dienen zur Eichung von inkrementalen Meßsystemen, weil durch ihre zur Meßteilung absolut festliegende Lage jederzeit ein Bezugspunkt der inkrementalen Meßteilung reproduziert werden kann. Eine Referenzmarke RI besteht aus einer Anzahl von Feldern RI₁...RIₙ die innerhalb der Umfeldteilung 3 nach einem vorgegebenen Schema angeordnet sind. Näheres über die Ausgestaltung und Anordnung von derartigen Referenzmarken ist in der DE-C2-34 16 864 nachzulesen.

Die Felder RI₁...RIₙ weisen ebenfalls Gitterlinien auf, die senkrecht zu den Gitterlinien der Meßteilung 2 verlaufen, also in Meßrichtung. Die Gitter der Felder RI₁...RIₙ haben eine bestimmte Teilungsperiode.

Die Abtastung des Teilungsträgers 1 erfolgt mit Hilfe einer Abtastplatte 4, die in Figur 1 schematisiert gezeigt ist. Die Abtastplatte 4 weist dazu Meßteilungs-Abtastfelder A2 und Referenzmarken-Abtastfelder ARI auf.

Über dem Meßteilungs-Abtastfeld A2 ist ein quer zur Meßrichtung ablenkendes Prisma 5 angeordnet, durch das eine optische Trennung der Abtaststrahlengänge bei der Abtastung der Meßteilung 2 und der Referenzmarken RI erreicht wird.

Es können auch andere ablenkende Mittel anstelle des Prismas 5 verwendet werden. Auch die Zuordnung des ablenkenden Mittels zum Abtastfeld A2 der Meßteilung 2 ist nicht zwingend erforderlich, denn auch durch Zuordnung des ablenkenden Elementes zum Referenzmarken-Abtastfeld ARI ist eine optische Trennung der Abtaststrahlengänge möglich. Die vorbeschriebenen Variationen wird der Fachmann bei der Realisierung sinnvoll abstimmen.

Figur 2 zeigt die Ansicht einer Platine 6 auf der die Lichtquelle L und Photodetektoren P₁ bis P₈ angeordnet sind. Auf die waagerechte Reihe der Photodetektoren P₁, P₂ und P₃ fallen gebeugte Teilstrahlenbündel der Beleuchtungsstrahlung mit einer Phasenverschiebung von jeweils 120° zueinander. Diese Teilstrahlenbündel sind durch Beugung an Gittern gemäß der EP-B1-0 163 362 entstanden, wie sie durch die Meßteilung 2 und das zugehörige Abtastfeld A2 gebildet werden.

Von der Umfeldteilung 3 gebeugte Teilstrahlenbündel gelangen auf den Photodetektor P₄, und auf den Photodetektor P₅ treffen die gebeugten Teilstrahlenbündel, die durch die Referenzmarkenfelder RI₁...ₙ abgebeugt worden sind (selbstverständlich immer im Zusammenwirken mit den zugehörigen Abtastfeldern ARI auf der Abtastplatte 4).

Die Felder C1, C2, C3 der Codierungsmarke C (Figur 3) sind als Rechteckphasengitter ausgestaltet und erzeugen zur Lichtquelle (Beleuchtungseinrichtung L) svmmetrische Beugungsbilder der ± 1. Beugungsordnungen. Diese werden gemäß Figur 2 von Photodetektorpaaren P6, P7 und P8 detektiert. Die nicht näher bezeichnete Auswerteschaltung ist so ausgestaltet, daß die Beaufschlagung des betreffenden Photodetektors mit Licht als logische "1" ausgewertet wird. Wenn auf den betreffenden Photodetektor kein Licht fällt, bedeutet dies logisch "0".

Durch die Parameter der Gitter der Felder C1, C2, C3 und deren Orientierung kann also die zugehörige Referenzmarke RI binär codiert werden.

Mit n Feldern pro Codiermarke können also mindestens 2ⁿ Referenzmarken auscodiert werden.

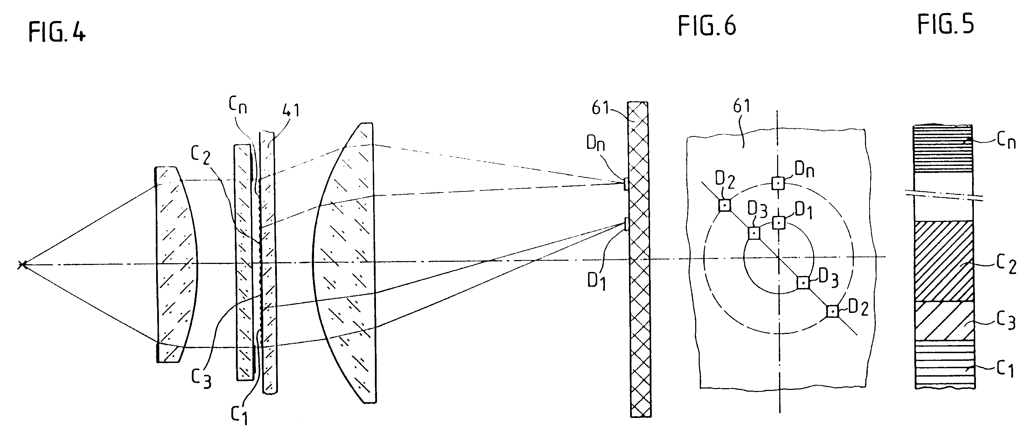

Als Beispiel für unterschiedliche Gitterausbildungen nach Gitterkonstante und Orientierung der Gitter soll Figur 5 dienen. Die Codefelder C1, C2, C3 und Cn befinden sich auf einem Trägerkörper 41, der in dem Optikschema gemäß Figur 4 im Querschnitt dargestellt ist. Auf die Darstellung von Meßteilung, Referenzmarke und Umfeldteilung wurde hier verzichtet, da die vorbeschriebene Art der Codierung von Referenzmarken auch bei inkrementalen Meßsystemen erfolgen kann, die keine Phasengitter aufweisen.

Das Optikschema aus Figur 4 ist analog zu dem aus Figur 1 anzusehen. Es soll aber gezeigt werden, daß mit den beugenden Feldstrukturen der Felder C1 und Cn aus Figur 5 gezielt Detektoren D1 und Dn beaufschlagt werden können. Auch durch unterschiedliche Orientierung der Felder C2, C3 und gleichzeitig unterschiedliche Gitterkonstanten läßt sich die Detektoranordnung gezielt bestimmen, wie Figur 6 zeigt. Dabei müssen die Detektorpaare D2 und D3 keinesfalls unter einem Winkel von 45° zur senkrechten Achse angeordnet sein.

Abgesehen von der Wellenlänge λ des verwendeten Lichtes kann also die Lage der Beugungsbilder auch gezielt verändert werden, indem man die Phasengitter entsprechend ausgestaltet, was anhand weiterer Ausführungsbeispiele noch näher erläutert werden wird.

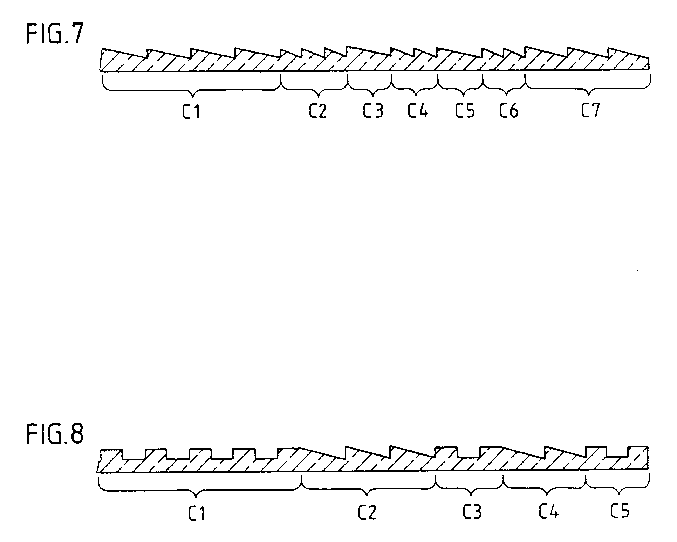

In Figur 7 wird im Querschnitt eine Variante mit Echelette-Phasengitter gezeigt, bei der die Felder C1 bis C7 unterschiedliche Gitterkonstanten und/oder Ausrichtungen aufweisen. Die Beugungsbilder der Beleuchtung werden der Variation entsprechend abgelenkt, und die den einzelnen Beugungsbildern zugeordneten Photodetektoren entsprechend plaziert. Dadurch können den einzelnen Referenzmarken Codefelder zugeordnet werden, die unterschiedliche Beugungsbilder erzeugen und durch Abgriff der entsprechenden Photodetektoren einen binären Code für die entsprechende Referenzmarke erzeugen.

Ferner sind gemäß Figur 8 Kombinationen von Rechteck-Phasengittern mit Echelette-Phasengittern gleicher oder unterschiedlicher Gitterkonstanten möglich, wobei auch hier noch die Ausrichtung der Phasengitter unterschiedlich gemacht werden kann.

Die Ausgestaltung der Gitter wird der Fachmann den Einsatzbedingungen entsprechend auswählen und kombinieren. Besondere Bedeutung kommt dabei der beliebigen gegenseitigen Neigung der Gitter zu, wodurch man eine günstige räumliche Trennung der Photodetektoren für die Codierungssignale und die Inkrementalsignale erreichen kann.

Selbstverständlich ist auch die Verwendung von Amplitudengittern möglich.

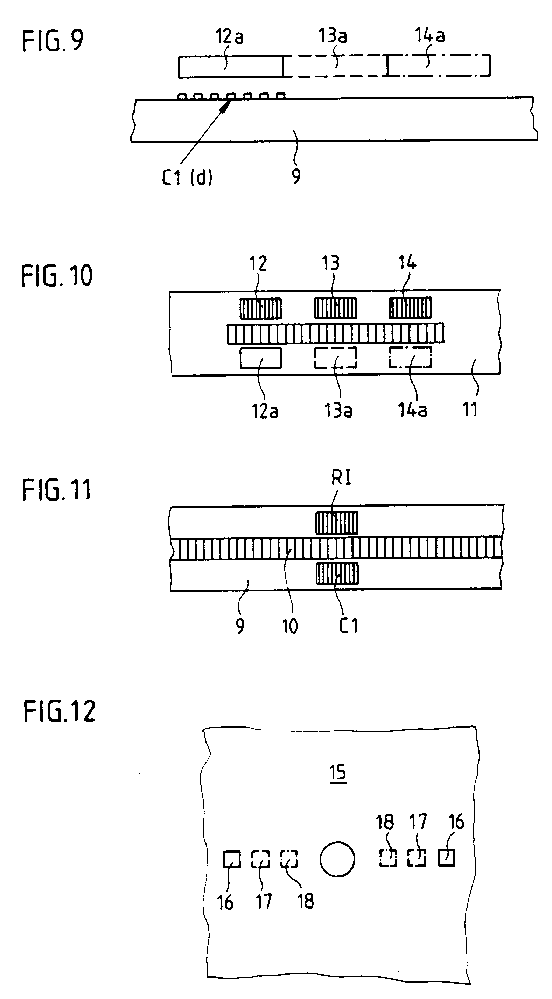

Eine weitere Möglichkeit, die Felder von Codierungsmarken auszugestalten, besteht in der Verwendung von Farbfiltern als wellenlängenselektive Elemente. Dieses Beispiel ist in den Figuren 9 bis 12 schematisch dargestellt.

Ein Maßstab 9 weist eine beliebige Inkrementalteilung 10 auf. Der Inkrementalteilung ist wenigstens eine Referenzmarke RI zugeordnet, die von einer Codiermarke C1 spezifiziert wird. Die Referenzmarke RI ist beliebig ausgebildet, die Codemarkierung C1 besteht aus einem Phasengitter mit der Gitterkonstanten d. Eine Indexplatte, auch Abtastplatte 11 genannt, trägt in bekannter Weise ein nicht näher bezeichnetes Abtastfeld für die Inkrementalteilung. Ferner trägt sie für jede Position, für die die Relativlage von Maßstab 9 und Abtastplatte 11 auscodierbar sein soll, ein Abtastfeld 12, 13, 14 für die Referenzmarke RI.

Mit Hilfe jedes der Abtastfelder 12, 13 und 14 wird demgemäß ein Referenzimpuls erzeugt, wenn die Abtastplatte 11 gegenüber dem Maßstab 9 verschoben wird.

Jedem der Referenzmarken-Abtastfelder 12, 13, 14 ist ein Farbfilter zugeordnet. Dem Referenzmarken-Abtastfeld 12 ein Rotfilter 12a, dem Referenzmarken-Abtastfeld 13 ein Grünfilter 13a und dem Referenzmarken-Abtastfeld 14 ein Blaufilter 14a.

Eine Platine 15 trägt Photodetektor-Paare 16, 17 und 18, die den Farben Rot, Grün und Blau zugeordnet sind (gleiche Linierung bedeutet gleiche Farbe).

Bei Beleuchtung mit Weißlicht werden durch die Farbfilter verschiedene diskrete Wellenlängen erzeugt. Durch Beugung an dem Gitter der Codierungsmarke C1 wird nun gerade durch dasjenige Detektorpaar mit Licht beaufschlagt, das einer bestimmten Wellenlänge, und somit einem bestimmten Farbfilter zugeordnet ist und damit letztendlich einer bestimmten Relativlage von Maßstab und Abtasteinheit entspricht.

Wie zu den anderen Ausführungsbeispielen bereits beschrieben wurde, entspricht Lichteinfall auf einen Photodetektor einer logischen "1" und kein Lichteinfall demgemäß einer logischen "0".

Bei Verschiebung der Abtastplatte 11 gegenüber dem Maßstab 9 können also drei verschiedene Relativpositionen dieser Elemente durch eine Referenzmarke RI bestimmt werden, die mit Hilfe der den Positionen zugeordneten Farbfiltern 12a, 13a, 14a binär codiert sind. Der Code gibt dabei die jeweilige Relativposition absolut an.

Es versteht sich, daß die vorbeschriebene Anordnung auch mit sinngemäß vertauschten Elementen erfolgreich zu betreiben ist. So können auf einem Maßstab - wie üblich - mehrere Referenzmarken RI und diesen zugeordnet gleichartige Codierungsmarken C1 angeordnet sein, wobei letzteren jedoch verschiedene Farbfilter zugeordnet sind. Auf der Abtastplatte befindet sich außer den Spuren zur Abtastung der Inkrementalteilung und der Referenzmarken lediglich ein transparentes Fenster der Länge der Codierungsmarke C1, durch das von den Farbfiltern - den Codierungs-Feldern Ci des Maßstabes zugeordnet - selektierte Teilstrahlenbündel auf zugehörige Photodetektoren gelenkt werden, was wieder zu einer codierten Referenzmarkenbestimmung führt.

Anstelle von Weißlicht-Beleuchtung und Farbfiltern können auch Lichtquellen mit unterschiedlicher Wellenlänge zur Selektion von einzelnen Referenzmarken verwendet werden.

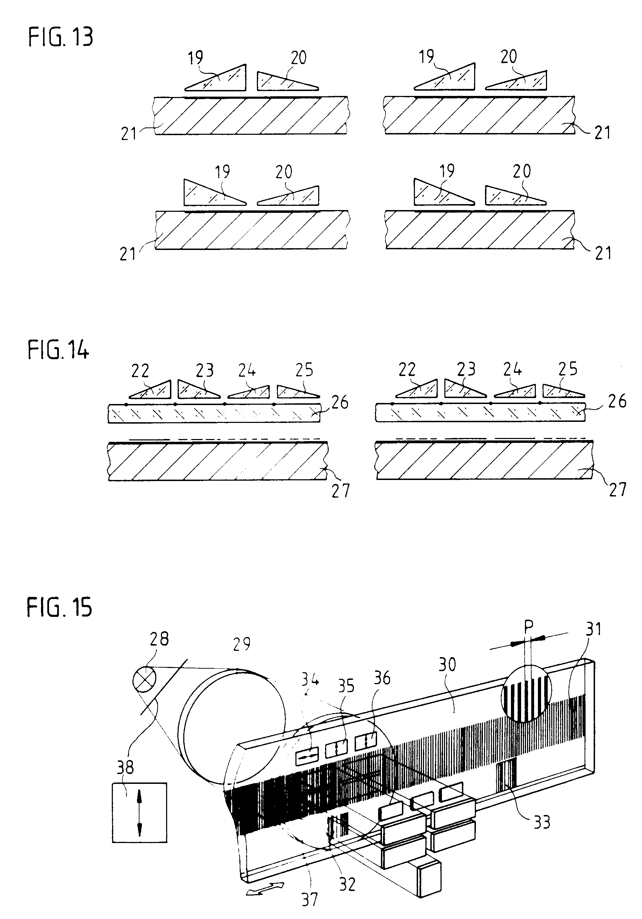

In Figur 13 ist dargestellt, daß brechende Elemente zur Richtungsselektion durch Prismen 19, 20 realisiert werden können. Die Prismen 19 und 20 können in verschiedenen Kombinationen auf dem reflektierenden Maßstab 21 den hier nicht gezeigten Referenzmarken zugeordnet werden. Die Prismen können auch wechselweise weggelassen sein. Die Beugungsbilder werden von Photoelementen detektiert, die auf einer Detektorplatine - ähnlich wie in den Figuren 2, 6 und 12 symbolisiert - angeordnet sind.

In Figur 14 ist eine Anordnung gezeigt, bei der Prismen 22, 23, 24 und 25 auf einer Abtastplatte 26 angeordnet sind. Am Maßstab 27 sind den Prismen 22, 23, 24 und 25 in bestimmter Weise reflektierende und absorbierende Bereiche zugeordnet. Die vorbeschriebenen Maßnahmen führen ebenfalls zu einer gezielten Selektion von Beugungsordnungen.

In Figur 15 ist das Schema einer inkrementalen Positionsmeßeinrichtung gezeigt, die im sogenannten Durchlichtprinzip arbeitet.

Von einer Lichtquelle 28 fällt Licht auf einen Kondensor 29, der es parallel ausrichtet. Das Licht durchtritt einen Glas-Maßstab 30, auf dem eine Meßteilung 31 mit einer Teilungsperiode P aufgebracht ist. Auf dem Maßstab 30 sind ferner Referenzmarken 32 und 33 angeordnet, von denen der einen Referenzmarke 32 Polarisationsfilter 34, 35 und 36 zur Codierung zugeordnet sind. Durch die unterschiedlich einstellbaren Polarisationsebenen der Polarisationsfilter 34, 35, 36 kann die Referenzmarke 32 auscodiert werden. Die Polarisationsebenen sind durch Pfeile kenntlich gemacht.

Zur Abtastung des Maßstabes 30 dient eine Abtastplatte 37, die alle erforderlichen Abtastfelder enthält. Auf einer nicht dargestellten Detektorplatine befinden sich die Photoelemente für die Abtastung der Meßteilung, der Referenzmarken und deren Codierung. Sie sind nicht näher bezeichnet, weil sie denen aus den vorangegangenen Beispielen gleichen.

Im Strahlengang der Lichtquelle 28 ist ein Polarisationsfilter 38 angeordnet, das die Polarisationsebene bestimmt (Pfeilrichtung). Durch die Ausrichtung der Polarisationsfilter 34, 35 und 36 wird nun festgelegt, welches der Photoelemente für die Codierung der Referenzmarke 32 mit Licht beaufschlagt wird, und welches kein Licht erhält. Damit kann - ähnlich wie vorbeschrieben - wieder ein Binärcode gebildet werden, der die jeweilige Referenzmarke auscodiert und dadurch identifiziert.

## Patentansprüche

1. Photoelektrische Positionsmeßeinrichtung mit einer Maßverkörperung (1) und einer relativ zur Maßverkörperung beweglichen Abtasteinrichtung (4) zur Abtastung der Maßverkörperung, welche eine Meßteilung (2) und Referenzmarken (R) aufweist, wobei jeder Referenzmarke wenigstens eine Codierungsmarke (C) zugeordnet ist, sowie mit einer mit der Abtasteinrichtung in Verbindung stehenden Auswerteeinrichtung, dadurch gekennzeichnet, daß die Codierungsmarken (C) in ihrer Struktur von den Referenzmarken (RI) abweichen und aus Feldern unterschiedlich wellenlängenselektiver und/oder unterschiedlich richtungsselektiver Elemente besteht.

2. Photoelektrische Positionsmeßeinrichtung nach Anspruch 1, dadurch gekennzeichnet, daß die Codierungsmarke (C) aus Feldern (C1...Cn) mit beugender Struktur besteht.

3. Photoelektrische Positionsmeßeinrichtung nach Anspruch 2, dadurch gekennzeichnet daß die beugenden Strukturen Gitter sind.

4. Photoelektrische Positionsmeßeinrichtung nach Anspruch 3, dadurch gekennzeichnet, daß die Gitter als Amplituden oder Phasengitter ausgebildet sind.

5. Photoelektrische Positionsmeßeinrichtung nach Anspruch 4, dadurch gekennzeichnet, daß die Phasengitter eine beliebige Profilform aufweisen.

6. Photoelektrische Positionsmeßeinrichtung nach Anspruch 3, dadurch gekennzeichnet, daß die Gitter (C1, C2, C3) unterschiedlich ausgerichtet sind.

7. Photoelektrische Positionsmeßeinrichtung nach Anspruch 1, dadurch gekennzeichnet, daß die wellenlängenselektiven Elemente als Filter (12a, 13a, 14a) wie Farbfilter, Interferenzfilter u.s.w. ausgebildet sind.

8. Photoelektrische Positionsmeßeinrichtung nach Anspruch 1, dadurch gekennzeichnet, daß die Codierungsmarke Felder brechender Struktur aufweist.

9. Photoelektrische Positionsmeßeinrichtung nach Anspruch 8, dadurch gekennzeichnet, daß als brechende Struktur Prismen (19, 20, 22, 23, 24, 25) vorgesehen sind.

10. Photoelektrische Positionsmeßeinrichtung nach Anspruch 1, dadurch gekennzeichnet, daß die Codierungsmarke aus Feldern (34, 35, 36) mit polarisationsoptisch wirkenden Elementen besteht.

11. Photoelektrische Positionsmeßeinrichtung nach Anspruch 10, dadurch gekennzeichnet, daß die Felder als Polarisationsfilter (34, 35, 36) ausgebildet sind.

12. Photoelektrische Positionsmeßeinrichtung nach Anspruch 10, dadurch gekennzeichnet, daß die Elemente aus Phasenplatten (λ/8; λ/4; λ/2) bestehen.

## Claims

1. Photoelectric position measuring device with an embodiment of a measure (1) and a scanning device (4) movable relative to the embodiment of a measure for scanning the embodiment of a measure, which comprises a measuring graduation (2) and reference marks (RI), wherein at least one coding mark (C) is associated with each reference mark, as well as with an evaluating device connected to the scanning device, characterised in that the coding marks (C) differ in structure from the reference marks (RI) and consist of areas of differently wavelength-selective and/or differently direction-selective elements.

2. Photoelectric position measuring device according to claim 1, characterised in that the coding mark (C) consists of areas (C1...Cn) of diffractive structure.

3. Photoelectric position measuring device according to claim 2, characterised in that the diffractive structures are grids.

4. Photoelectric position measuring device according to claim 3, characterised in that the grids are constructed as amplitude or phase grids.

5. Photoelectric position measuring device according to claim 4, characterised in that the phase grids have any profile shape.

6. Photoelectric position measuring device according to claim 3, characterised in that the grids (C1, C2, C3) are differently oriented.

7. Photoelectric position measuring device according to claim 1, characterised in that the wavelength-selective elements are constructed as filters (12a, 13a, 14a) such as colour filters, interference filters, etc.

8. Photoelectric position measuring device according to claim 1, characterised in that the coding mark has a structure which refracts areas.

9. Photoelectric position measuring device according to claim 8, characterised in that prisms (19, 20, 22, 23, 24, 25) are provided as a refractive structure.

10. Photoelectric position measuring device according to claim 1, characterised in that the coding mark consists of areas (34, 35, 36) with elements having an optical polarisation effect.

11. Photoelectric position measuring device according to claim 10, characterised in that the areas are constructed as polarisation filters (34, 35, 36).

12. Photoelectric position measuring device according to claim 10, characterised in that the elements consist of phase plates (λ/8; λ/4; λ/2).

## Revendications

1. Dispositif photoélectrique de mesure de position comportant une mesure matérialisée (1), un dispositif (4) de lecture de la mesure matérialisée qui est mobile par rapport à ladite mesure matérialisée, laquelle mesure matérialisée porte une graduation de mesure (2) et des repères de référence (R), au moins une repère de code (C) étant associé à chaque repère de référence, ainsi qu'un dispositif d'exploitation qui est connecté au dispositif de lecture, caractérisé par le fait que les repères de code (C) ont une structure différente de celle des repères de référence (RI) et sont constitués par des zones avec une sélectivité en longueur d'onde différente et des éléments avec une sélectivité en direction différente.

2. Dispositif photoélectrique de mesure de position selon la revendication 1, caractérisé par le fait que le repère de code (C) est constitué par des zones (C1...Cn) à structure diffractante.

3. Dispositif photoélectrique de mesure de position selon la revendication 2, caractérisé par le fait que les structures diffractantes sont des réseaux.

4. Dispositif photoélectrique de mesure de position selon la revendication 3, caractérisé par le fait que les réseaux sont agencés sous la forme de réseaux d'amplitude ou de réseaux de phase.

5. Dispositif photoélectrique de mesure de position selon la revendication 4, caractérisé par le fait que les réseaux de phase présentent un profil quelconque.

6. Dispositif photoélectrique de mesure de position selon la revendication 3, caractérisé par le fait que les réseaux (C1, C2, C3) présentent des orientations différentes.

7. Dispositif photoélectrique de mesure de position selon la revendication 1, caractérisé par le fait que les éléments sélectifs en longueur d'onde sont constitués par des filtres (12a, 13a, 14a) tels que des filtres chromatiques, des filtres d'interférence etc....

8. Dispositif photoélectrique de mesure de position selon la revendication 1, caractérisé par le fait que le repère de code présente des zones à structure réfringente.

9. Dispositif photoélectrique de mesure de position selon la revendication 8, caractérisé par le fait qu'il est prévu comme structure réfringente des prismes (19, 20, 22, 23, 24, 25).

10. Dispositif photoélectrique de mesure de position selon la revendication 1, caractérisé par le fait que le repère de code est constitué par des zones (34, 35, 36) avec des éléments à action polarisante.

11. Dispositif photoélectrique de mesure de position selon la revendication 10, caractérisé par le fait que les zones sont agencées sous forme de filtres polarisants (34, 35, 36).

12. Dispositif photoélectrique de mesure de position selon la revendication 10, caractérisé par le fait que les éléments sont constitués par des lames de phase (λ/8; λ/4; λ/2).
